# EUROPEAN PATENT SPECIFICATION

(11) **EP 2 667 428 B1**
(45) Date of publication and mention of the grant of the patent: **09.12.2015**
(21) Application number: 13169061.2
(22) Date of filing: 24.05.2013
(51) Int. Cl.: H01M 10/613, H01M 10/6555, H01M 10/6557, H01M 10/647, H01M 10/625, H01M 2/10

(54) **Battery module**
Batteriemodul
Module de batterie

(30) Priority: 24.05.2012 US 201261651235 P; 15.03.2013 US 201313833200
(43) Date of publication of application: 27.11.2013
(73) Proprietor: Samsung SDI Co., Ltd., Gyeonggi-do 449-577 (KR); ROBERT BOSCH GMBH, 70442 Stuttgart (DE)
(72) Inventor: Kim, Myung-Chul, 446-711 Yongin-si (KR); Jin, Hee-Joon, 446-711 Yongin-si (KR); Lim, Young-Bin, 446-711 Yongin-si (KR); Ahn, Jang-Gun, 446-711 Yongin-si (KR)
(74) Representative: Gulde & Partner

(56) References cited:
- EP-A1- 2 315 293
- WO-A1-01/28008
- US-A1- 2006 049 799

## Description

### BACKGROUND

### 1. Field

The invention relates to a battery module, and more particularly, to a battery module for improving electrical safety.

### 2. Description of the Related Art

A high-power battery module using a non-aqueous electrolyte with high energy density has recently been developed. The high-power battery module is configured as a large-capacity battery module manufactured by connecting a plurality of battery cells in series so as to be used in driving motors of devices requiring high power, e.g., electric vehicles and the like.

An electrochemical reaction occurs in a battery cell, and electrical energy generated by the electrochemical reaction is transferred to the outside of the battery cell through positive and negative electrode terminals. Since a case for fixing the battery cell is generally made of metal, there is a risk such as an electrical short circuit between the case and the battery cell, and therefore, the battery cell is insulated from the case. On the other hand, in case of a battery module including a plurality of battery cells, there may occur a problem in that the insulation of the battery cells is broken in a process of fixing the battery cells, which may cause a problem of safety to the battery module. Barriers for separating battery cells from each other and from the case are disclosed in EP 2 315 293 A1, WO 01/28008 A1 and US 2006/00497099 A1.

### SUMMARY

The object of the invention is to provide a battery module for improving electrical safety.

The invention solves the above object by a battery module according to claim 1.

In particular, the battery module may comprise a plurality of battery cells arranged one behind the other, and at least one barrier between two adjacent of the battery cells. The barrier may comprise a base plate that is arranged between the two adjacent battery cells of the plurality of battery cells, and a housing, in which the two battery cells and the barrier are arranged. The barrier may comprise a first plate and a second plate that essentially extend perpendicular to the base plate and between the battery cell and the housing. The first plate may comprise an inner surface facing one of the battery cells, wherein at least one inner spacing member can be provided on the inner surface. The second plate can comprise an outer surface facing away from one of the battery cells, wherein at least one outer spacing member may be provided on the outer surface. The spacing members increase a space between the battery cells and the housing, thereby providing for an improved insulation between the battery cells and the housing. The at least one inner spacing member can be formed with a support section that is arranged between its free end and the inner surface. The support section may have a minimum diameter, that is smaller than a maximum diameter of the free end, thereby improving dripping-off of condensed humidity.

At least one opening may be provided in the first plate and / or the second plate. The opening enables flowable media like air to circulate, in order to e.g. influence the temperature of the battery cell and/or to prevent humidity to affect insulation of the battery cell.

The barrier can comprise a third plate opposite the second plate and a fourth plate opposite the first plate. The second and third plates may extend between the first plate and the fourth plate, wherein one of the battery cells is preferably arranged between the first, the second, the third and the fourth plates. The second and third plates may be provided with at least one inner spacing member on each of their inner sides. With plates that frame the battery cell, the battery cell is prevented from contacting the housing at least in directions in which the plates are arranged between the battery cell and the housing.

At least one outer spacing member may be arranged at an outer side of the first plate, thereby further increasing the distance between the battery cell and the housing.

The at least one opening in the second plate and the at least one opening in the third plate preferably define a path for a cooling medium, providing for an effective method of cooling the battery cell.

The at least one opening in the second plate can overlap the at least one opening in the third plate along the path for the cooling medium, thereby decreasing flow resistance of the barrier.

At least two inner spacing members are provided on the inner surface, wherein the opening is preferably arranged between the inner spacing members. Hence, the distance between the battery cell and the housing is increased without affecting the flow of the cooling medium.

On a side of the base plate that faces one of the adjacent battery cells, a spacer may be provided, that protrudes from the side, preferably towards one of the adjacent battery cells. The spaces enable the path for the cooling medium to flow along and thereby cool the battery cell.

The at least one inner spacing member may essentially extend perpendicular to the base plate, thereby preventing that condensed humidity is blocked from flowing away from the battery cell.

The at least one outer spacing member may essentially extend parallel to the base plate thereby preventing that condensed humidity is blocked from flowing away from the barrier.

A free end of the at least one inner spacing member preferably has a rounded shape, such that condensed humidity may easily drop off the inner spacing member.

The at least one outer spacing member on the outer surfaces of the second and/or third plate is preferably ramp shaped, rising from the outer surface while extending towards the bottom plate, thereby further improving dripping-off of condensed humidity..

At least two outer spacing members may be provided on each of the outer surfaces of the second and/or third plate, wherein the at least two outer spacing members are preferably arranged one after the other. Due to such an arrangement, the path for the cooling medium may not be blocked by the outer spacing member and / or humidity dripping-off one of the outer spacing member may drip onto another of the spacing members below, thereby knocking off condensed humidity of the other spacing member, even if the condensed humidity of the other spacing member did not reach a state in which it would yet readily drop-off from the other spacing member.

The plates may protrude from opposite sides or edged of the base plate. Thus, both of the battery cells, between which the barrier is arrange, can profit from the advantageous properties and advantages of the barrier. Hence, the invention provides for a battery module capable of preventing battery cells from being electrically connected to one another. In particular, the battery module may include: a plurality of battery cells arranged in one direction; barriers interposed between the respective battery cells; and a housing accommodating the battery cells and the barriers, wherein the barrier includes a base plate disposed in parallel with wide surfaces of the battery cell and a first and a second plate bent from at least one side of each corner of the base plate so as to face a side surface of the battery cell, the first and second plates being provided with a plurality of spacing members respectively protruded from surfaces of the first plate, and at least one end portion of the spacing member is rounded.

The base plate may be provided in a shape corresponding to the wide surfaces of the battery cell.

The first and second plates may be connected vertical to the base portion at the corners of the base plate.

The first and second sides may be respectively provided at both the sides of the base plate, the first plate being provided at the bottom of the base plate, and a fourth plate being provided at the top of the base portion.

One or more openings acting as a path of a heat exchange medium may be provided to the first and the second plates.

The openings may include a plurality of holes spaced apart from one another in the length direction of the first and the second plate.

The spacing member may be an inner spacing member provided to an inner surface of the first plate coming in contact with the battery cell, and an outer spacing member provided to an outer surface that is a surface opposite to the inner surface.

The inner spacing member may be provided between the first plate and the battery cell, and the rounded end portion of the inner spacing member may be provided to come in contact with the battery cell.

The inner spacing member may include a support section protruded from the first plate and a hemispherical free end provided on the support portion.

The diameter of the support section may be provided to correspond to that of the hemispherical free end.

The inner spacing member may be provided to have a length corresponding to the width of the inner surface of the first plate, and a plurality of inner spacing members may be spaced apart from one another at a predetermined interval.

A pair of bar-shaped outer spacing members may be formed with the opening interposed therebetween on each of the first and the second plates.

The inner spacing member may include a support section protruded from the first plate and a hemispherical free end provided on the support section, and the diameter of the support section may be provided to be smaller than that of the hemispherical free end.

The support section may be provided in a cylindrical shape, and a portion of the hemispherical free end, contacting the support section, may be rounded.

The support section may be provided in a cylindrical shape, and a portion of the hemispherical free end, contacting the support section, may be provided in parallel with the first plate.

At least one portion of the outer spacing member may be inclined to have a lower portion wider than an upper portion.

The outer spacing member may be provided adjacent to the opening in the second plate.

A plurality of outer spacing members may be provided, and the plurality of outer spacing members may be spaced apart from one another in the length direction of the second plate.

As described above, according to the present invention, it is possible to provide a battery module for improving electrical safety.Further, it is possible to provide a battery module capable of preventing battery cells from being electrically connected to one another, using a new member, namely the barrier.

The heat exchange medium exchanging heat with the battery cell may be cooling water or cooled air. When the battery cell is cooled under a very humid environment, condensed water may form on the surface of the battery cell due to the cooling of moisture. The housing fixing the battery cell and the outer surface of the battery cell may be made of a material such as stainless steel. In this case, there is a problem in that the battery cell and the housing are electrically connected to each other by the condensed water.

In the battery module according to the invention, the spacing members may be provided between the battery cell and the barrier and between the barrier and the housing, so that it is possible to prevent the battery cell and the housing from being electrically connected to each other by the condensed water. Further, one or more spacing members are preferably provided to the barrier provided to surround the battery cell, and the spacing members can space apart the battery cell, the barrier and the housing from one another. Thus, although condensed water is formed on the surface of the battery cell, the condensed water may be discharged into a space formed by spacing apart the battery cell and the barrier from each other. Since an end portion of the spacing member provided between the battery cell and the barrier is rounded, the spacing member comes in contact with the battery cell in a narrow area, and the condensed water can be easily discharged along the rounded outer surface of the spacing member.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery module according to an embodiment of the present invention.
FIG. 2 is a perspective view of a barrier interposed between battery cells according to the embodiment of the present invention.
FIG. 3A is a perspective view of the barrier of FIG. 2.
FIG. 3B is a front view of the barrier of FIG. 2.
FIG. 4 is a sectional view taken along line I-I of FIG. 1.
FIG. 5 is a perspective view of a barrier according to another embodiment of the present invention.
FIG. 6 is a perspective view of a barrier according to still another embodiment of the present invention.
FIG. 7 is a perspective view of a barrier according to yet another embodiment of the present invention.
FIG. 8 is a perspective view of a barrier according to still yet another embodiment of the present invention.

### DETAILED DESCRIPTION

In the following detailed description, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

Hereinafter, embodiments of the present invention will be described with reference to the accompanying drawings.

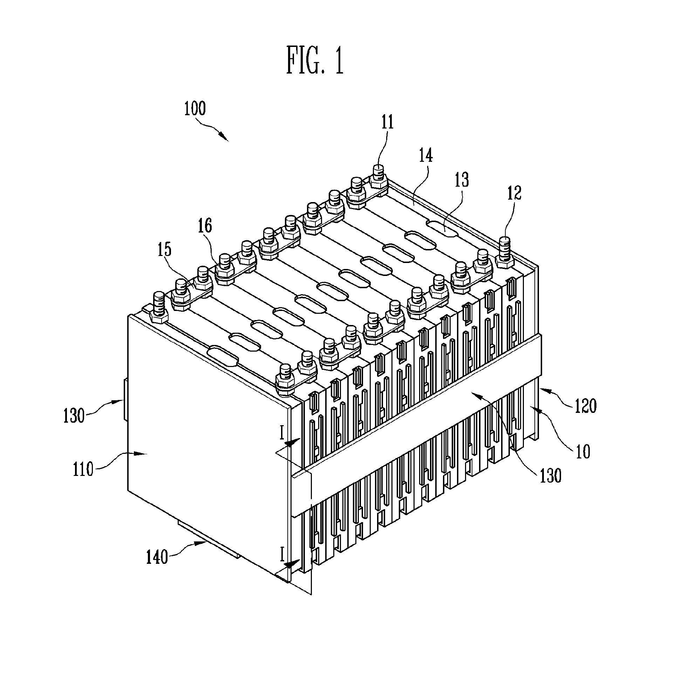

FIG. 1 is a perspective view of a battery module according to an embodiment of the present invention.

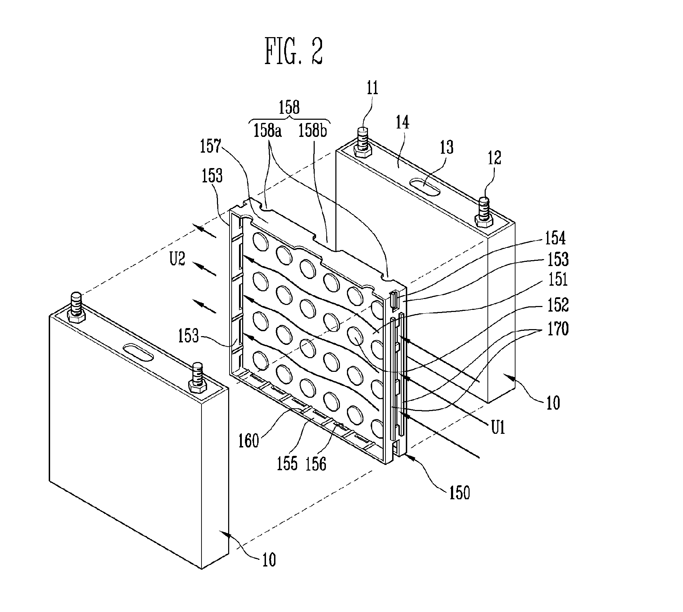

The battery module 100 according to this embodiment includes a plurality of battery cells 10 arranged in one direction; barriers 150 interposed between the respective battery cells 10; and a housing 110, 120, 130 and 140 accommodating the battery cells 10 and the barriers 150. The barrier 150 includes a base plate or portion 151 (See FIG. 2) disposed in parallel with wide surfaces of the battery cell 10, and one or more flange portions or side plates 153, 155 and 157 (See FIG. 2) bent from at least one side of each corner of the base plate 151 so as to face a side surface of the battery cell 10. At least one of the side plates is provided with a plurality of spacing members 160 and 170 (See FIG. 2) respectively protruded from surfaces of the side plate, and at least one free end portion of the spacing member is rounded.

The battery cell 10 may be manufactured by accommodating an electrode assembly and an electrolyte in a battery case and then sealing the battery case with a cap assembly 14. The cap assembly 14 may include a positive electrode terminal 11, a negative electrode terminal 12 and a vent 13. The electrode assembly is electrically connected to the positive and negative electrode terminals 11 and 12, and the positive and negative electrode terminals 11 and 12 become a path along which energy generated by an electrochemical reaction of the electrode assembly and the electrolyte is transferred to the outside of the battery cell 10. The vent 13 serves as a path through which gas generated in the inside of the battery cell 10 is exhausted to the outside of the battery cell 10.

The housing 110, 120, 130 and 140 fixes together the plurality of battery cells 10 and the barriers 150 interposed between the respective battery cells 10, and the plurality of battery cells 10 may acts as one power source. The housing 110, 120, 130 and 140 may include a pair of end plates 110 and 120 disposed to face the wide surfaces of the battery cells 10 at the outermost sides of the battery cells 10, and connection members 130 and 140 connecting the first and second end plates 110 and 120 to each other.

The connection members 130 and 140 may include a pair of side plates 130 and a bottom plate 140. The pair of side plates 130 may support both side surfaces of the battery cells 10, and the bottom plate 140 may support bottom surfaces of the battery cells 10. One end of each of the side and bottom plates 130 and 140 is fastened to the first end plate 110 and the other end of each of the side and bottom plate 130 and 140 is fastened to the second end plate 120, so that the side and bottom plates 130 and 140 can connect the first and second end plates 110 and 120 to each other. In this case, the fastening may be performed by a bolt and nut or the like, but the present invention is not limited thereto.

The first and second end plates 110 and 120 and the connection members 130 and 140 may fix the plurality of battery cells 10, and the positive and negative electrode terminals 11 and 12 of neighboring battery cells 10 may be electrically connected to each other by a bus-bar 15. The bus-bar 15 may be provided with holes through which the positive and negative electrode terminals 11 and 12 pass, respectively. The bus-bar 15 connected to the positive and negative electrode terminals 11 and 12 by respectively passing the positive and negative electrode terminals 12 through the holes may be fixed by a nut 16 or the like.

The first and second end plates 110 and 120 the pair of side plates 130 and the bottom plate 140 are used to stably fix the plurality of battery cells 10 and the barriers 150. The present invention is not limited to the form of this embodiment, and may be variously modified. The connection structure and number of the battery cells 10 may be variously changed depending on a design of the battery module 100.

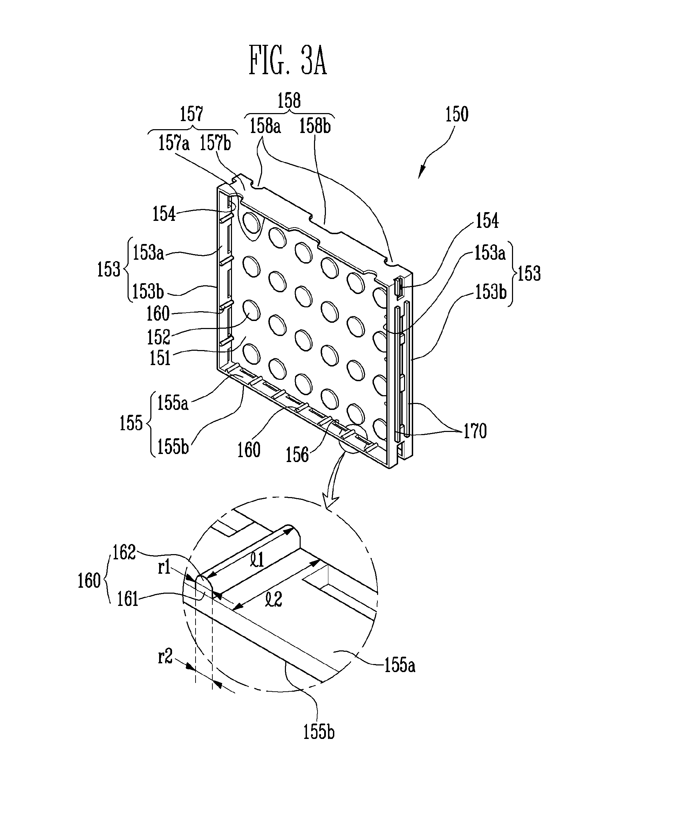

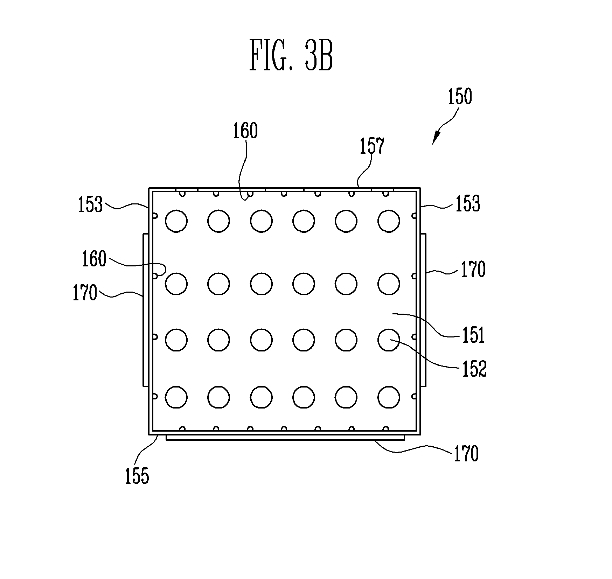

FIG. 2 is a perspective view of a barrier interposed between battery cells according to the embodiment of the present invention. FIG. 3A is a perspective view of the barrier of FIG. 2. FIG. 3B is a front view of the barrier of FIG. 2.

Referring to FIGS. 2 to 3B, the barrier 150 may include the base plate or portion 151 disposed in parallel with wide surfaces of the battery cell 10, and one or more plates or flange portions 153, 155 and 157 provided vertical to each corner of the base plate 151. A plurality of spacing members 160 and 170 each having one end portion rounded may be provided to the plates 153, 155 and 157. The spacing members 160 and 170 can space apart the battery cell 10 and the barrier 150, and the barrier 150 and the housing from each other.

The base plate 151 may be provided in a shape corresponding to the wide surfaces of the battery cell 10. The base portion 151 may include a plurality of spacers 152 protruded from a side or surface of the base plate 151 so as to space apart the base plate 151 and the battery cell 10 from each other. In this case, the plurality of spacers 151 may be spaced apart from one another.

The plates 153, 155 and 157 may all be provided to both the side portions and top and bottom portions of the base plate 151. The plates 153, 155 and 157 may be connected vertical to the base plate 151 at the corners of the base plate 151. In this case, the base plate 151 may be connected to a central portion of the plates 153, 155 and 157. The plates 153, 155 and 157 may have a rectangular flat shape respectively provided to face the side surfaces of the battery cell 10. For example, the plates 153, 155 and 157 may include two side or second plates 153 respectively provided at both the sides of the base plate 151, a bottom or first plate 155 provided at the bottom of the base plate 151, and a top or fourth plate 157 provided at the top of the base plate 151.

One or more openings 154 and 156 acting as a path of a heat exchange medium may be provided to the side or bottom plate 153 or 155. The openings 154 and 156 may include a plurality of holes spaced apart from one another in the length direction of the side or bottom plate 153 or 155. The openings 154 and 156 may be provided at a central portion of the side or bottom plates 153 or 155. Since the openings 154 and 156 are provided at the central portion of the side or bottom plates 153 or 155, the openings 154 and 156 may all communicate with one another on one and the other surfaces of the base plate 151. Since the openings 154 and 156 are spaced apart from one another, the base plate 151 may be connected to the central portion of the side or bottom plates 153 or 155.

The battery module 100 includes the plurality of battery cells 10, and the battery cell 10 generates heat while repeating charging/discharging thereof. Since the heat promotes deterioration of the battery cell and becomes the cause of a problem such as firing or explosion of the battery cell in a serious case, the heat is necessarily removed. In this case, the openings 154 and 156 provided to the side or bottom plates 153 or 155 of the barrier 150 according to this embodiment may act as a path U1 to U2 of the heat exchange medium. The heat exchange medium flowing in the barrier 150 through the openings 154 and 156 may exchange heat with the battery cell 10 by passing between the spacers 152 of the base plate 151 and directly facing the wide surface of the battery cell 10. Thus, the lifetime of the battery module 100 can be extended by effectively controlling the temperature of the battery cell 10.

The bottom plate 155 connects the bottoms of the two side plates 153 to each other, and may be extended to have a width identical to that of the side plates 153. The top plate 157 connects the tops of the two side plates 153 to each other, and may be provided in a shape corresponding to the cap assembly 14 of the battery cell 10. For example, the cap assembly 14 of the battery cell 10 may be provided with the positive electrode terminal 11, the negative electrode terminal 12 and the vent 13, and one or more concave portions 158 may be provided at an edge portion of the top plate 157 so that the positive electrode terminal 11, the negative electrode terminal 12 and the vent 13 are exposed to the outside therethrough. The concave portion 158 may include a first concave portion 158a provided to have a shape corresponding to an approximately half of the bottom section of the positive or negative electrode terminal 11 or 12, and a second concave portion 158b provided to have a shape corresponding to an approximately half of the section of the vent 13. The top plate 157 of neighboring barriers 150 interposed between the battery cells are provided adjacent to each other. In this case, the first concave portions 158a of the adjacent top flange portions 157 may expose the positive or negative electrode terminal 11 or 12, and the second concave portions 158b of the adjacent top flange portions 157 may expose the vent 13.

The inner sides or surfaces contacting the battery cell 10 in the side, bottom and top plates 153, 155 and 157 are referred to as first sides or surfaces 153a, 155a and 157a, respectively, and the opposite surfaces to the first surfaces 153a, 155a and 157a are referred to as outer or second sides or surfaces 153b, 155b and 157b, respectively. In this case, the spacing member 160 and 170 may include a first spacing member 160 provided to any one of the first surfaces 153a, 155a and 157a of the side, bottom and top plates 153, 155 an 157, and a second spacing member 170 provided to any one of the second surfaces 153b, 155b and 157b of the side, bottom and top plates 153, 155 and 157.

The first spacing member 160 is provided between the battery cell 10 and the plates 153, 155 and 157 so as to fix the battery cell 10. The first spacing member 160 may be provided so that the rounded free end portion of the first spacing member 160 comes in contact with the battery cell 10. The first spacing member 160 may include a support section or portion 161 protruded from the plate 153, 155 or 157, and a hemispherical free end 162 provided on the support portion 161. For example, the diameter r2 of the support portion 161 may be provided to correspond to that r1 of the hemispherical free end 162. The first spacing member 160 is provided to the first surfaces 153a, 155a and 157a of the plates 153, 155 and 157, and may be provided at a portion except the portion provided with the opening 154 so that the first spacing member 160 and the opening 154 are not interfered with each other. The length ℓ1 of the first spacing member 160 is provided to correspond to the width ℓ2 of the first surfaces 153a, 155a and 157a of the plates 153, 155 and 157, and a plurality of first spacing members 160 may be spaced apart from one another at a predetermined interval. For example, the opening 154 and the first spacing member 160 may be alternately provided.

The second spacing members 170 are provided in parallel with each other in the length direction of the side or bottom plate 153 or 155 on the second surface 153b or 155b of the side or bottom plate 153 or 155, and may be provided adjacent to the openings 154 and 156 provided to the side or bottom plate 153 or 155. A pair of bar-shaped second spacing members 170 may be provided, formed with the openings 154 and 156 interposed therebetween on each of the side and bottom plates 153 and 155.

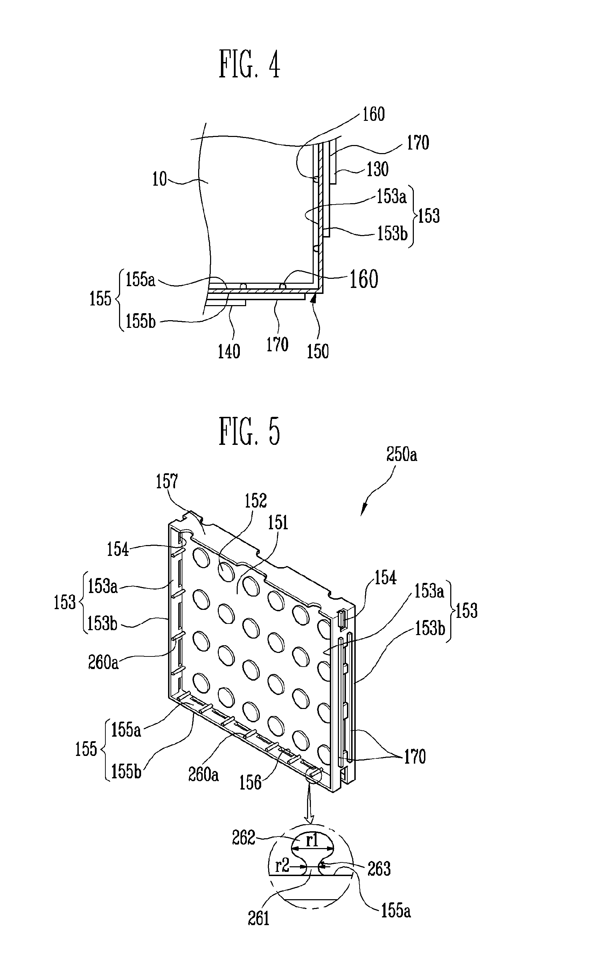

FIG. 4 is a sectional view taken along line I-I of FIG. 1.

Referring to FIG. 4, the battery cell 10 may be spaced apart from the first surfaces 153a and 155a of the side and bottom plates 153 and 155 of the barrier 150 by the first spacing members 160. The connection members 130 and 140 may be spaced apart from the second surfaces 153b and 155b of the side and bottom plates 153 and 155 by the second spacing members 170.

Hereinafter, other embodiments of the present invention will be described with reference to FIGS. 5 to 8. Contents of these embodiments, except the following contents, are similar to those of the embodiment described with reference to FIGS. 1 to 4, and therefore, their detailed descriptions will be omitted.

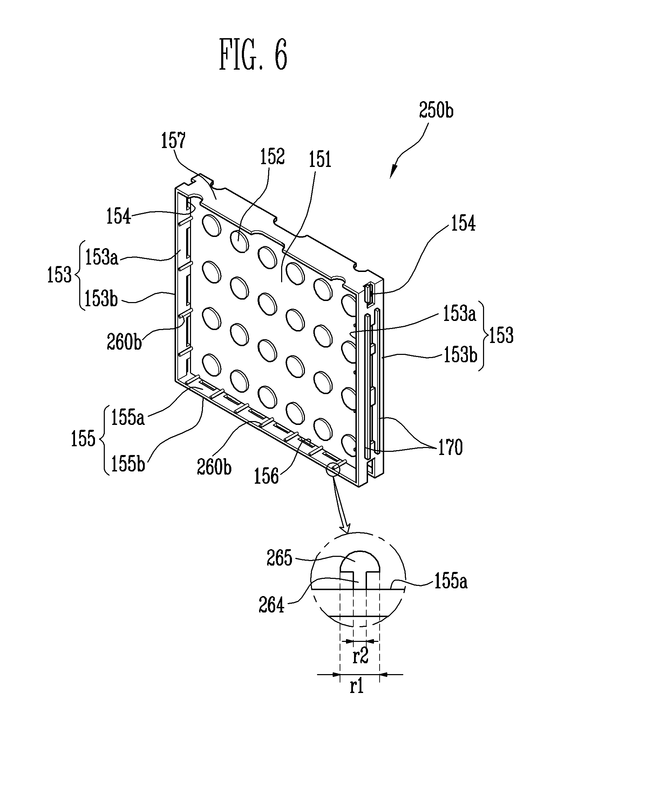

FIG. 5 is a perspective view of a barrier according to another embodiment of the present invention. FIG. 6 is a perspective view of a barrier according to still another embodiment of the present invention.

Referring to FIGS. 5 and 6, the barrier 250a or 250b may include the base plate 151 and a plurality of plates 153, 155 and 157. A first spacing member 260a or 260b may be provided on first surfaces 153a and 155a of one or more of the plates 153, 155 and 157, and second spacing members 170 may be provided on second surfaces 153b and 155b of the plates 153, 155 and 157. The first spacing member 260a or 260b may include a support section or portion 261 or 264 protruded from the plate 153, 155 or 157, and a hemispherical free end 262 or 265 provided on the support portion 261 or 264. For example, the width r2 of the support section 261 or 264 may be provided to be smaller than the diameter r1 of the hemispherical free end 262 and 265. The first spacing members 260a or 260b may be alternately provided with the openings 154 and 156 to the side and bottom plates 153 and 155.

For example, in the first spacing member 260a of the barrier 250a of FIG. 5, the support section 261 may be provided in a cylindrical shape, and a portion 263 of the hemispherical free end 262, contacting the support section 261, may be rounded. That is, an end of the hemispherical free end 262 may be smoothly connected to the support section 261. In the first spacing member 260b of the barrier 250b of FIG. 6, the support section 264 may be provided in a cylindrical shape, and a portion of the hemispherical free end 265, contacting the support section 264, may be provided in parallel with the first surface 155a of the plate. In the barrier 250a or 250b of FIGS. 5 or 6, the width r2 of the support section 261 or 264 in the first spacing member 260a or 260b is provided to be smaller than the diameter r1 of the hemispherical free end 262 or 265, and therefore, condensed water formed on the surface of the battery cell flows to the bottom of the hemispherical free end 262 or 265 along the surface of the hemispherical free end 262 or 265. In this case, the support section 261 or 264 is provided to have an area or cross section smaller than that of the hemispherical free ends 262 or 265, and thus the condensed water can be effectively discharged to the outside of the barrier 250a or 250b.

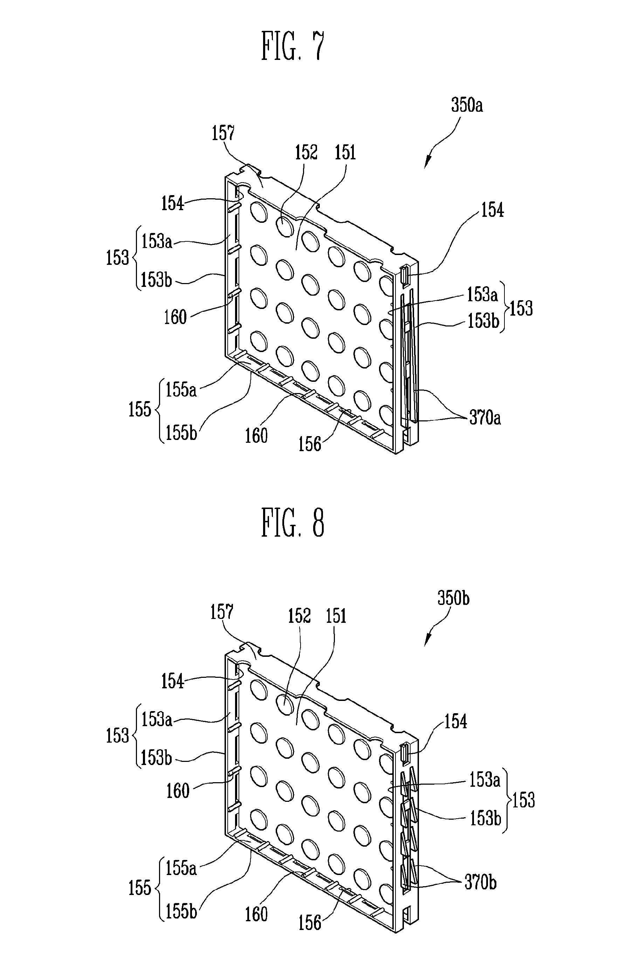

FIG. 7 is a perspective view of a barrier according to yet another embodiment of the present invention. FIG. 8 is a perspective view of a barrier according to still yet another embodiment of the present invention.

Referring to FIGS. 7 and 8, the barrier 350a or 350b may include the base plate 151, a plurality of plates 153, 155 and 157, the first spacing member 160 provided to first surfaces 153a or 155a of the plates 153, 155 and 157, and second spacing members 370a or 370b provided to second surfaces 153b or 155b of the plates 153, 155 and 157. At least one portion of the second spacing member 370a or 370b may be inclined to have a lower portion wider than an upper portion. The second spacing member 370a or 370b may be provided the side and bottom plates 153 and 155 preferably except the top plate 157. In this case, the section of the second spacing member 370a or 370b provided to the side plate 153 may be provided to have a triangular shape.

For example, the second spacing member 370a provided to the barrier 350a of FIG. 7 may be provided adjacent to the opening 154 in the side flange portion 153, and a pair of second spacing members 370a may be provided in parallel with the opening 154 interposed therebetween. The barrier 350b of FIG. 8 may include a plurality of second spacing members 370b, and the plurality of second spacing members 370b may be spaced apart from one another in the length direction of the side flange portion 153.

The second spacing member 370a or 370b may space apart the barrier and the housing from each other. Condensed water formed on the surface of the housing is not penetrated into the barrier but may be dropped to the bottom of the barrier. On the other hand, the second spacing member provided to the bottom plate 155 may be formed in a bar shape so as to support the weight of the battery cell and to maintain balance. Since the bottom plate 155 is adjacent to a bottom portion of the housing, the condensed water immediately drops at ease. On the other hand, the condensed water is flowed along the side plate 153. In this case, the second spacing member 370a or 370b provided to the side plate 153 is inclined, and thus the condensed water can be easily dropped and discharged.

## Claims

1. Battery module (100) with a plurality of battery cells (10) arranged one behind the other, with at least one barrier (150) that comprises a base plate (151) that is arranged between two adjacent battery cells (10) of the plurality of battery cells (10), and with a housing, in which the two battery cells (10) and the barrier (150) are arranged, wherein the barrier (150) comprises a first plate (155) and a second plate (153) that essentially extend perpendicular to the base plate (151) and between the battery cell (10) and the housing, the first plate (155) comprising an inner surface (155a) facing one of the battery cells (10), wherein at least one inner spacing member (160) is provided on the inner surface (155a), and the second plate (153) comprising an outer surface (153b) facing away from one of the battery cells (10),wherein at least one outer spacing member (170) is provided on the outer surface (153b), **characterized in that** the at least one inner spacing member (260a, b) is formed with a support section (261, 264) that is arranged between its free end (262, 265) and the inner surface (155a, 153a), wherein the support section (261, 264) has a minimum diameter (r2), that is smaller than a maximum diameter (r1) of the free end (262, 265).

2. Battery module (100) according to claim 1, **characterized in that** at least one opening (154, 156) is provided in the first plate (155) and / or the second plate (153).

3. Battery module (100) according to claim 1 or 2, **characterized in that** the barrier (150) comprises a third plate (153) opposite the second plate (153) and a fourth plate (157) opposite the first plate (155), the second and third plates (153) extending between the first plate (155) and the fourth plate (157), wherein one of the battery cells (10) is arranged between the first, the second, the third and the fourth plates (155, 153, 153, 157), and wherein the second and third plates (153) are provided with at least one inner spacing member (160) on each of their inner sides (153a).

4. Battery module (100) according to any of claims 1 to 3, **characterized in that** at least one outer spacing member (170) is arranged at an outer side (155b) of the first plate (155).

5. Battery module (100) according to any of claims 2 to 4, **characterized in that** the at least one opening (154) in the second plate (153) and the at least one opening (154) in the third plate (153) define a path (U1, U2) for a cooling medium.

6. Battery module (100) according to claim 5, **characterized in that** the at least one opening (154) in the second plate (153) overlaps the at least one opening (154) in the third plate (153) along the path (U1, U2) for a cooling medium.

7. Battery module (100) according to any of claims 2 to 6, **characterized in that** at least two inner spacing members (160) are provided on the inner surface (155a, 153a), wherein the opening (154, 156) is arranged between the inner spacing members (160).

8. Battery module (100) according to any of claims 1 to 7, **characterized in that** on a side of the base plate (151), the side facing one of the adjacent battery cells (10), a spacer (152) is provided, that protrudes from the side.

9. Battery module (100) according to any of claims 1 to 8, **characterized in that** the at least one inner spacing member (160) essentially extends perpendicular to the base plate (151).

10. Battery module (100) according to any of claims 1 to 9, **characterized in that** the at least one outer spacing member (170) essentially extends parallel to the base plate (151).

11. Battery module (100) according to any of claims 1 to 10, **characterized in that** a free end (262, 265) of the at least one inner spacing member (260a, b) has a rounded shape.

12. Battery module (100) according to any of claims 1 to 11, **characterized in that** the at least one outer spacing member (370a, b) on the outer surfaces (153b) of the second and/or third plate (153) is ramp shaped, rising from the outer surface (153b) while extending towards the bottom plate (155).

13. Battery module (100) according to any of claims 1 to 12, **characterized in that** at least two outer spacing members (370b) are provided on each of the outer surfaces (153b) of the second and/or third plate (153), wherein the at least two outer spacing members (370b) are arranged one after the other.

14. Battery module (100) according to any of claims 1 to 13, **characterized in that** at least the first and the second plates (155, 153) protrude from opposite sides of the base plate (151), the opposite sides facing battery cells (10) adjacent to the base plate (151).

## Patentansprüche

1. Batteriemodul (100) mit einer Vielzahl von Batteriezellen (10), die hintereinander angeordnet sind, mit zumindest einer Barriere (150), die eine Basisplatte (151), die zwischen zwei benachbarten Batteriezellen (10) der Vielzahl der Batteriezellen (10) angeordnet ist, aufweist, und mit einem Gehäuse, in dem die zwei Batteriezellen (10) und die Barriere (150) angeordnet sind, wobei die Barriere (150) eine erste Platte (155) und eine zweite Platte (153), die sich im Wesentlichen senkrecht zur Basisplatte (151) und zwischen der Batteriezelle (10) und dem Gehäuse erstrecken, aufweist, wobei die erste Platte (155) eine Innenfläche (155a), die einer der Batteriezellen (10) zugewandt ist, aufweist, wobei zumindest ein inneres Abstandsglied (160) auf der Innenfläche (155a) bereitgestellt wird, und die zweite Platte (153) eine Außenfläche (153b), die von einer der Batteriezellen (10) abgewandt ist, aufweist, wobei zumindest ein äußeres Abstandsglied (170) auf der Außenfläche (153b) bereitgestellt wird, **dadurch gekennzeichnet, dass** das zumindest eine innere Abstandsglied (260a, b) mit einem Stützabschnitt (261, 264), der zwischen seinem freien Ende (262, 265) und der Innenfläche (155a, 153a) angeordnet ist, ausgebildet ist, wobei der Stützabschnitt (261, 264) einen kleinsten Durchmesser (r2), der kleiner als ein größter Durchmesser (r1) des freien Endes (262, 265) ist, aufweist.

2. Batteriemodul (100) nach Anspruch 1, **dadurch gekennzeichnet, dass** zumindest eine Öffnung (154, 156) in der ersten Platte (155) und/oder der zweiten Platte (153) bereitgestellt wird.

3. Batteriemodul (100) nach Anspruch 1 oder 2, **dadurch gekennzeichnet, dass** die Barriere (150) eine dritte Platte (153), die der zweiten Platte (153) gegenüberliegt, und eine vierte Platte (157), die der ersten Platte (155) gegenüberliegt, aufweist, wobei sich die zweite und dritte Platte (153) zwischen der ersten Platte (155) und der vierten Platte (157) erstrecken, wobei eine der Batteriezellen (10) zwischen der ersten, zweiten, dritten und vierten Platte (155, 153, 153, 157) angeordnet ist, und wobei die zweite und dritte Platte (153) mit zumindest einem inneren Abstandsglied (160) auf jeder ihrer Innenseiten (153a) bereitgestellt werden.

4. Batteriemodul (100) nach einem der Ansprüche 1 bis 3, **dadurch gekennzeichnet, dass** zumindest ein äußeres Abstandsglied (170) auf einer Außenseite (155b) der ersten Platte (155) angeordnet ist.

5. Batteriemodul (100) nach einem der Ansprüche 2 bis 4, **dadurch gekennzeichnet, dass** die zumindest eine Öffnung (154) in der zweiten Platte (153) und die zumindest eine Öffnung (154) in der dritten Platte (153) einen Pfad (U1, U2) für ein Kühlmittel definieren.

6. Batteriemodul (100) nach Anspruch 5, **dadurch gekennzeichnet, dass** die zumindest eine Öffnung (154) in der zweite Platte (153) die zumindest eine Öffnung (154) in der dritten Platte (153) entlang des Wegs (U1, U2) für ein Kühlmittel überlappt.

7. Batteriemodul (100) nach einem der Ansprüche 2 bis 6, **dadurch gekennzeichnet, dass** zumindest zwei innere Abstandsglieder (160) auf der Innenfläche (155a, 153a) bereitgestellt sind, wobei die Öffnung (154, 156) zwischen den inneren Abstandsgliedern (160) angeordnet ist.

8. Batteriemodul (100) nach einem der Ansprüche 1 bis 7, **dadurch gekennzeichnet, dass** auf einer Seite der Basisplatte (151), der Seite, die einer der benachbarten Batteriezellen (10) zugewandt ist, ein Abstandshalter (152) bereitgestellt ist, der von der Seite vorragt.

9. Batteriemodul (100) nach einem der Ansprüche 1 bis 8, **dadurch gekennzeichnet, dass** sich das zumindest eine innere Abstandsglied (160) im Wesentlichen senkrecht zur Basisplatte (151) erstreckt.

10. Batteriemodul (100) nach einem der Ansprüche 1 bis 9, **dadurch gekennzeichnet, dass** sich das zumindest eine äußere Abstandsglied (170) parallel zur Basisplatte (151) erstreckt.

11. Batteriemodul (100) nach einem der Ansprüche 1 bis 10, **dadurch gekennzeichnet, dass** ein freies Ende (262, 265) des zumindest einen inneren Abstandsglieds (260a, b) eine gerundete Form aufweist.

12. Batteriemodul (100) nach einem der Ansprüche 1 bis 11, **dadurch gekennzeichnet, dass** das zumindest eine äußere Abstandsglied (370a, b) auf den Außenflächen (153b) der zweiten und/oder dritten Platte (153) rampenförmig ist, wobei es von der Außenfläche (153b) ansteigt, während es sich zur Bodenplatte (155) erstreckt.

13. Batteriemodul (100) nach einem der Ansprüche 1 bis 12, **dadurch gekennzeichnet, dass** zumindest zwei äußere Abstandsglieder (370b) auf jeder der Außenflächen (153b) der zweiten und/oder dritten Platte (153) bereitgestellt sind, wobei die zumindest zwei äußeren Abstandsglieder (370b) nacheinander angeordnet sind.

14. Batteriemodul (100) nach einem der Ansprüche 1 bis 13, **dadurch gekennzeichnet, dass** zumindest die erste und die zweite Platte (155, 153) von gegenüberliegenden Seiten der Basisplatte (151) hervor ragen, wobei die gegenüberliegenden Seiten Batteriezellen (10), die zur Basisplatte (151) benachbart sind, zugewandt sind.

## Revendications

1. Module de batterie (100) avec une pluralité d'éléments de batterie (10) agencés les uns derrière les autres, avec au moins une barrière (150) qui comprend une plaque de base (151) qui est agencée entre deux éléments de batterie (10) adjacents de la pluralité d'éléments de batterie (10), et avec un boîtier dans lequel les deux éléments de batterie (10) et la barrière (150) sont agencés, dans lequel la barrière (150) comprend une première plaque (155) et une deuxième plaque (153) qui s'étendent sensiblement perpendiculairement à la plaque de base (151) et entre l'élément de batterie (10) et le boîtier, la première plaque (155) comprenant une surface interne (155a) faisant face à l'un des éléments de batterie (10), dans lequel au moins un élément d'espacement interne (160) est prévu sur la surface interne (155a), et la deuxième plaque (153) comprenant une surface externe (153b) orientée à l'opposé de l'un des éléments de batterie (10), dans lequel au moins un élément d'espacement externe (170) est prévu sur la surface externe (153b), **caractérisé en ce que** le au moins un élément d'espacement interne (260a, b) est formé avec une section de support (261, 264) qui est agencée entre son extrémité libre (262, 265) et la surface interne (155a, 153a), dans lequel la section de support (261, 264) a un diamètre minimum (r2) qui est inférieur à un diamètre maximum (r1) de l'extrémité libre (262, 265).

2. Module de batterie (100) selon la revendication 1, **caractérisé en ce qu'**au moins une ouverture (154, 156) est prévue dans la première plaque (155) et/ou la deuxième plaque (153).

3. Module de batterie (100) selon la revendication 1 ou 2, **caractérisé en ce que** la barrière (150) comprend une troisième plaque (153) opposée à la deuxième plaque (153) et une quatrième plaque (157) opposée à la première plaque (155), les deuxième et troisième plaques (153) s'étendant entre la première plaque (155) et la quatrième plaque (157), dans lequel l'un des éléments de batterie (10) est agencé entre la première, la deuxième, la troisième et la quatrième plaque (155, 153, 153, 157), et
dans lequel les deuxième et troisième plaques (153) sont prévues avec au moins un élément d'espacement interne (160) sur chacun de leurs côtés internes (153a).

4. Module de batterie (100) selon l'une quelconque des revendications 1 à 3, **caractérisé en ce qu'**au moins un élément d'espacement externe (170) est agencé au niveau d'un côté externe (155b) de la première plaque (155).

5. Module de batterie (100) selon l'une quelconque des revendications 2 à 4, **caractérisé en ce que** la au moins une ouverture (154) dans la deuxième plaque (153) et la au moins une ouverture (154) dans la troisième plaque (153) définissent une trajectoire (U1, U2) pour un milieu de refroidissement.

6. Module de batterie (100) selon la revendication 5, **caractérisé en ce que** la au moins une ouverture (154) dans la deuxième plaque (153) recouvre la au moins une ouverture (154) dans la troisième plaque (153) le long de la trajectoire (U1, U2) pour un milieu de refroidissement.

7. Module de batterie (100) selon l'une quelconque des revendications 2 à 6, **caractérisé en ce qu'**au moins deux éléments d'espacement interne (160) sont prévus sur la surface interne (155a, 153a), dans lequel l'ouverture (154, 156) est agencée entre les éléments d'espacement internes (160).

8. Module de batterie (100) selon l'une quelconque des revendications 1 à 7, **caractérisé en ce que**, sur un côté de la plaque de base (151), le côté faisant face à l'un des éléments de batterie (10) adjacents, on prévoit un dispositif d'espacement (152) qui fait saillie depuis le côté.

9. Module de batterie (100) selon l'une quelconque des revendications 1 à 8, **caractérisé en ce que** le au moins un élément d'espacement interne (160) s'étend essentiellement perpendiculairement à la plaque de base (151).

10. Module de batterie (100) selon l'une quelconque des revendications 1 à 9, **caractérisé en ce que** le au moins un élément d'espacement externe (170) s'étend essentiellement parallèlement à la plaque de base (151).

11. Module de batterie (100) selon l'une quelconque des revendications 1 à 10, **caractérisé en ce qu'**une extrémité libre (262, 265) du au moins un élément d'espacement interne (260a, b) à une forme arrondie.

12. Module de batterie (100) selon l'une quelconque des revendications 1 à 11, **caractérisé en ce que** le au moins un élément d'espacement externe (370a, b) sur les surfaces externes (153b) de la deuxième et/ou troisième plaque (153) est en forme de rampe, remontant à partir de la surface externe (153b) tout en s'étendant vers la plaque inférieure (155).

13. Module de batterie (100) selon l'une quelconque des revendications 1 à 12, **caractérisé en ce qu'**au moins deux éléments d'espacement externes (370b) sont prévus sur chacune des surfaces externes (153b) de la deuxième et/ou de la troisième plaque (153), dans lequel les au moins deux éléments d'espacement externes (370b) sont agencés l'un après l'autre.

14. Module de batterie (100) selon l'une quelconque des revendications 1 à 13, **caractérisé en ce qu'**au moins la première et la deuxième plaque (155, 153) font saillie à partir des côtés opposés de la plaque de base (151), les côtés opposés faisant face aux éléments de batterie (10) adjacents à la plaque de base (151).
